# EUROPEAN PATENT APPLICATION

(11) **EP 4 428 343 A1**
(43) Date of publication of application: **11.09.2024**
(21) Application number: 24158482.0
(22) Date of filing: 19.02.2024
(51) Int. Cl.: F01L 3/22, F01L 3/08, F01L 3/20, F02F 1/24

(54) **METHOD FOR PROVIDING AT LEAST ONE VALVE SUPPORT IN A CYLINDER HEAD OF AN INTERNAL COMBUSTION ENGINE**

(30) Priority: 08.03.2023 GB 202303394
(71) Applicant: Caterpillar Energy Solutions GmbH, 68167 Mannheim (DE)
(72) Inventor: BERGER, Olaf, 68167 Mannheim (DE)
(74) Representative: Nordmeyer, Philipp Werner

(57) **Abstract**

The present invention pertains to a method for providing at least one valve support in a cylinder head of an internal combustion engine, in particular of a diesel or gas engine, the method comprising: a step (S 1) of determining a target shape of the valve support in an operating state of the cylinder head; a step (S2) of determining an initial shape of the valve support in a non-operating state of the cylinder head by determining a shape change the valve support is subjected to upon transferring the cylinder head from its non-operating state to its operating state; and a step (S3) of processing a semi-finished cylinder head in its non-operating state to provide the valve support in the cylinder head according to the initial shape.

## Description

### Technical Field

The present invention pertains to a method for providing at least one valve support in a cylinder head of an internal combustion engine, particularly of a diesel engine or a gas engine.

### Technological Background

Cylinder heads of known internal combustion engines, such as diesel or gas engines, are usually equipped with valves, also referred to as poppet valves, which are intended and configured to control timing and quantity of medium exchange within combustion chambers of the engine. For receiving and supporting the valves, the cylinder head is provided with valve seats each if which forms a surface against which an associated valve rests in a closed state. The valve seat may be a crucial component of the engine. As to substance, if the valve seat lacks dimensional accuracy, valve leakage may occur, thereby adversely affecting engine's operation and reliability.

For manufacturing the cylinder head, it is known to machine the valve seats into a casted cylinder head block. This manufacturing step is usually performed at conditions which substantially differ from an operating state of the cylinder head. Thus, as the cylinder head is subjected to high loads and high temperatures during its operating state compared to manufacturing conditions, the shape of the valve seat may become deformed during an intended use in view of its initial shape at manufacturing conditions.

To avoid excessive deformations of valve seats when a cylinder head is transferred from a manufacturing condition to an operating condition, it is known, for example from DE 37 41 855 A1, to clamp the cylinder head into a loaded state when machining the valve seats.

However, it may be cumbersome and tedious to accurately imitate all loads acting upon a cylinder head during operation when machining the valve seats into the cylinder head.

### Summary of the Invention

Thus, it is an objective to provide an improved method for providing at least one valve seat in a cylinder head, which in particular ensures an improved dimensional accuracy of the valve seat during operating conditions of the cylinder head.

This objective is solved by the subject matter of the independent claim. Preferred embodiments are set forth in the present specification, the Figures as well as the dependent claims.

Accordingly, a method is suggested for providing at least one valve support in a cylinder head of an internal combustion engine, in particular of a diesel or gas engine, the method comprising a step of determining a target shape of the valve support in an operating state of the cylinder head; a step of determining an initial shape of the valve support in a non-operating state of the cylinder head by determining a shape change the valve support is subjected to upon transferring the cylinder head from its non-operating state to its operating state; and a step of processing a semi-finished cylinder head in its non-operating state to provide the valve support in the cylinder head in its non-operating state according to the initial shape.

### Brief Description of the Drawings

The present disclosure will be more readily appreciated by reference to the following detailed description when being considered in connection with the accompanying drawings in which:
Fig. 1 shows a flow diagram illustrating a method for providing at least one valve support in a cylinder head of an internal combustion engine according to an embodiment of the invention;
Fig. 2 schematically shows the cylinder head in an operating state which is provided with a valve support having a target shape;
Figs. 3 to 5 schematically depict different sub-steps of processing the cylinder head in a non-operating state to provide a valve support therein; and
Figs. 6 to 8 schematically depict the use of a multiple purpose tool to provide the valve support.

### Detailed Description of Preferred Embodiments

In the following, the invention will be explained in more detail with reference to the accompanying Figures. In the Figures, like elements are denoted by identical reference numerals and repeated description thereof may be omitted in order to avoid redundancies.

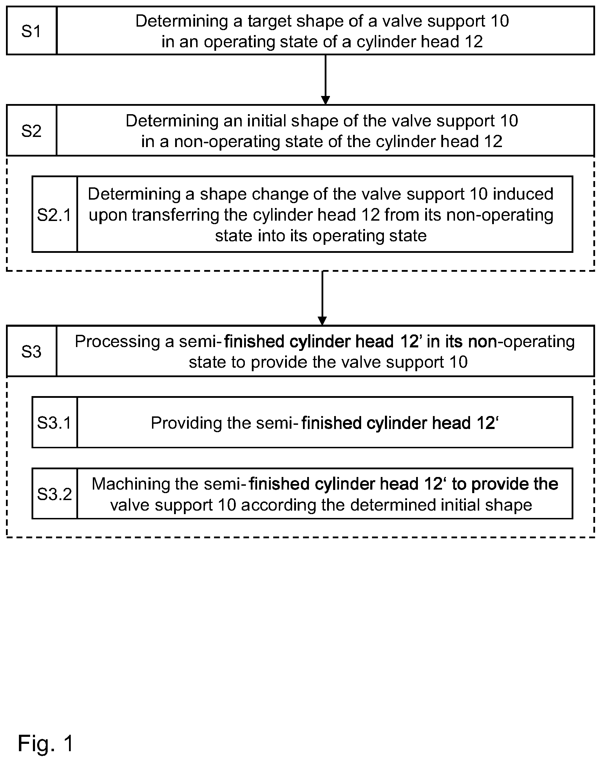

Figure 1 shows a flow diagram illustrating a method for providing at least one valve support 10 in a cylinder head 12 of an internal combustion engine, referred to as 'engine' in the following. The method may be applied to any internal combustion engine equipped with a cylinder head. The present invention is not limited to engines of a specific application and may be applied among different technical fields and applications, such as in internal combustion engines used in power plants or vehicles as a main or auxiliary engine or the like. For example, the engine comprising the cylinder head to be provided with the at least one valve seat may be a diesel engine or a gas engine, in particular a supercharged diesel engine or a supercharged gas engine.

In general, a cylinder head refers to a component of the engine which is mounted to a motor block and which partly delimits one or more combustion chambers of the engine. Accordingly, the cylinder head may be associated to one or more cylinders of the engine. An engine, depending on its configuration, may comprise a single cylinder head or more than one cylinder head. For example, in a configuration of the engine in which cylinders are arranged in a plurality of banks or rows, e.g. as employed in a V-configuration of an engine, separate cylinder heads may be provided per bank or row.

The cylinder head 12 accommodates a plurality of valves 14 which are configured to control timing and quantity of medium exchange within combustion chambers of the engine. For doing so, the engine comprises a valve actuating mechanism, typically including a camshaft, which may at least partly be accommodated in the cylinder head 12.

The valves 14 accommodated in the cylinder head 12 may be provided in the form of poppet valves and may include inlet valves and exhaust valves. Each cylinder of the engine may be associated to one or more inlet valves and one or more exhaust valves. Accordingly, the cylinder head 12 may be configured to receive one or more inlet valves and one or more exhaust valves per cylinder of the engine.

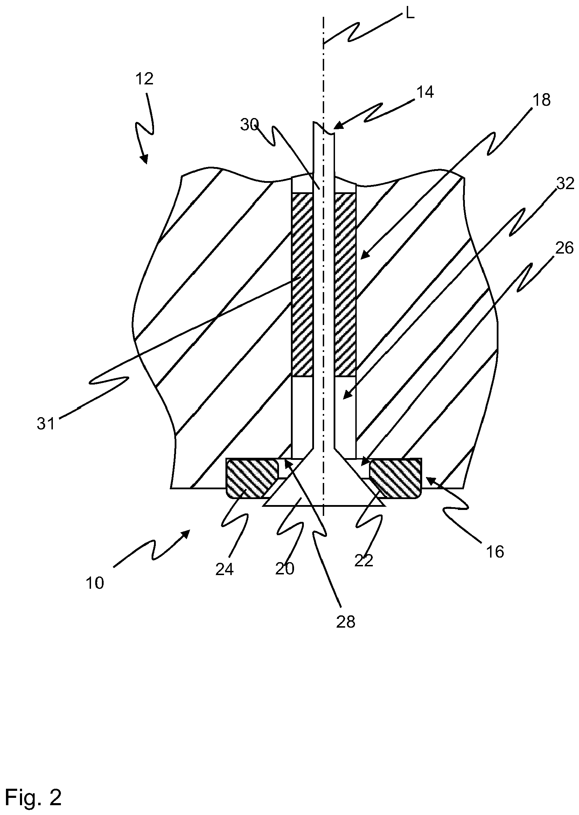

For receiving the valves 14, the cylinder head 12 is provided with a plurality of valve supports 10, each of which is intended and configured for accommodating and supporting one associated valve 14, as depicted in Fig. 2.

The basic structure and function of such an engine, its cylinder head 12 and its valve 14 employed therein are well known to a person skilled in the art and are thus not further specified. Rather, the method for providing a valve support 10 in a cylinder head and characteristics of the valve support 10 interlinked with the present invention are addressed in the following under reference to Figs. 1 to 8. It is apparent to the skilled person that the cylinder head 12, in addition to the valve supports 10, may include further components which are not further described herein, such as at least one of inlet passages, exhaust passages, coolant passages, camshafts, spark plugs, fuel injectors, etc.

Fig. 1 depicts a flow diagram illustrating the method for providing at least one valve support 10 in the cylinder head 12. In the following, the method is exemplary described by illustrating the provision of a single valve support 10 in the cylinder head 12. The described method may accordingly be applied to provide further valve supports 10 in the cylinder head 12, in particular by carrying out single method steps in parallel or iteratively one after the other for the plurality of valve supports 10 and/or by applying the method iteratively for the plurality of valve supports 10.

In step S 1 of the method, a target shape of the valve support 10 to be provided is determined. The target shape refers to a shape of the valve support 10 in an operating state of the cylinder head 12. As such, in the context of the present disclosure, the term 'target shape' refers to a predefined or desired shape, the valve support 10 is to take during the operating state of the cylinder head 12. The target shape may also be referred to as target geometry of the valve
support 10.

Further, in the context of the present disclosure, the term 'operating state' refers to a state in which the cylinder head 12 is employed in the engine during an operating condition of the engine, in particular during a predefined operating condition of the engine. Specifically, the operating condition the engine is subjected to during the operating state of the cylinder head 12 may be a full-load operating condition. During the full-load operating condition, the engine may be run at maximum torque or maximum power. Alternatively, the operating condition the engine is subjected to during the operating state of the cylinder head 12 may be a partial-load operating condition. During the partial-load operating condition, the engine may run below its maximum torque or maximum power. For example, at its partial-load operating condition, the engine may be run at or substantially at 90% or 80% or 70% or 60% or 50% or 40% of its maximum torque or maximum power. Alternatively or additionally, the operating condition the engine is subjected to during the operating state of the cylinder head 12 may be an operating condition at which the engine is run at high efficiency or maximum efficiency or substantially maximum efficiency. Alternatively or additionally, the operating condition the engine is subjected to during the operating state of the cylinder head 12 may be a main operating condition of the engine, i.e. an operating condition in which the engine is or is intended to run the most of its operating time.

As set forth above, the valve support 10 is configured to receive and support the valve 14, in particular which may be an inlet valve or an exhaust valve. The target shape of the valve support 10 is a shape which, at least partly, is designed correspondingly to a shape of the valve 14 received in the valve support 10 in the operating sate of the cylinder head 12. The design and configuration of the valve support 10 is described in the following under reference to Fig. 2 which depicts the cylinder head 12 in the operating state which is provided with the valve support 10 having the target shape.

For the sake of a concise overview, in Fig. 2, the cylinder head 12 is shown in a simplified and schematic form in which depictions of further structural characteristics, such as inlet passages, exhaust passages, cooling passages, etc., are omitted.

Specifically, the valve support 10 comprises a valve seat section 16 and a valve guide section 18. The valve seat section 16 is intended and configured to receive and mate with a conical section 20 of the associated valve 14. Specifically, in a closed state of the valve 14, i.e. in which the valve blocks an inlet passage or an exhaust passage in the cylinder head 12, the conical section 20 of the valve 14 bears against a correspondingly designed conical seating surface 22 of the valve seat section 16. In the shown configuration, the valve seat section 16 comprises a seat insert 24 and a recessed seat portion 26 into which the seat insert 24 is press-fitted. The seat insert 24, which in the shown configuration is provided as a seat ring, has a hollow-cylindrical shape, at an inner circumferential surface of which the conical seating surface 22 is formed. In the assembled state of the seat insert 24 as depicted in Fig. 2, the seat insert 24 bears against a bottom surface 28, also referred to as a seating surface 28, of the recessed seat portion 26. In other words, the seating surface 28 is a planar surface at which the seat insert 24 bears.

In an alternative configuration, the recessed seat portion may have a stepped shape having a first inner wall of a first diameter and a second inner wall of the second diameter being smaller than the first diameter. In such a configuration, the seating insert may have a stepped outer surface correspondingly designed to the stepped shape of the recessed seat portion such that, in the assembled state, the seat insert bears against the seating surface which is circumferentially delimited by the second inner wall.

In a further alternative configuration, the conical seating surface 22 may be formed by the recessed seat portion of the cylinder head, i.e. by an inner circumferential surface of the recessed seat portion. In other words, in such a configuration, the conical seating surface 22 is cut into the material of the cylinder head such that the seat insert 24 may be omitted.

The seat support 10 further comprises the valve guide section 18 which serves to guide movement of a valve stem 30 of the valve 14. As such, the valve guide section 18 allows the valve 14 to reciprocatingly move therein along a longitudinal axis L of the valve 14 which coincides with a longitudinal axis of the valve support 10, in particular of the valve guide section 18.

The valve guide section 18 comprises a valve guide 31 and a recessed guide portion 32. In the shown configuration, the valve guide 31 is a hollow-cylindrical component, preferably of metal, which is press-fitted into the recessed guide portion 32. Alternatively, the valve guide may be integrally cast or cut into the material of the cylinder head 12, in particular such that a circumferential inner surface of the recessed guide portion 32 forms the valve guide.

As set forth above, in step S1 of the method, the target shape of the valve support 10 in the operating state of the cylinder head 12 is determined. Specifically, in this step, the target shape of at least one of, preferably of both, the valve seat section 16 and the valve guide section 18 is determined. For determining the target shape of the valve seat section 16, the target shape of at least one of the recessed seat portion 26 and the conical seating surface 22 may be determined. For determining the target shape of the valve guide section 18, the target shape of at least one of the valve guide 31, in particular the inner circumferential surface of the valve guide 31 at which the valve stem 30 bears in the assembled state, and the recessed guide portion 32 is determined.

In general, for providing a valve support into a cylinder head, the cylinder head is usually processed in a non-operating state. In the context of the present disclosure, the term 'non-operating state' refers to a state of the cylinder head which differs from the operating state thereof. Generally speaking, loads, such as inner tensions or thermal loads, the cylinder head is subjected to during the operating state are not or only partially present in the non-operating state. Specifically, the non-operating state of the cylinder head 12 may refer to a state in which the cylinder head 12 is disassembled from the engine. Further, the non-operating state of the cylinder 12 may refer to a state in which the cylinder head is subjected to a manufacturing procedure.

Usually, valve supports 10 are provided in the cylinder head by processing a semi-finished cylinder head 12', in particular by machining a semi-finished cylinder head 12', during the non-operating state. Generally, the term 'semi-finished' describes a non-finished product or component that needs further processing before being a finished component. In the present disclosure, reference signs denoted with an apostrophe (') refer to semi-finished components. As such, the semi-finished cylinder head 12' may be a casted cylinder head block which needs further processing before being employed in the engine.

In the context of the present invention, it has been found that a valve support provided in a cylinder head during manufacturing conditions, i.e. which is a non-operating state of the cylinder head, may be subjected to deformations and shape changes when the cylinder head is employed in an engine. Thus, processing the valve support in the cylinder head according to the target shape when the cylinder head is in a non-operating condition may result in a shape of the valve support during operation of the engine which deviates from the desired target shape due to the above described shape changes.

Accordingly, the proposed method comprises a step S2 of determining an initial shape of the valve support 10 in a non-operating state of the cylinder head by determining a shape change the valve support 10 is subjected to upon transferring the cylinder head 12 from its non-operating state to its operating state; and a step S3 of, in the non-operating state of the semi-finished cylinder head 12', processing the semi-finished cylinder head 12' to provide the valve support 10 in the cylinder head 12 according to the initial shape. By doing so, the shape change of the valve support, i.e. induced upon transferring the cylinder head 12 from its non-operating state to its operating state, is taken into account when processing the semi-finished cylinder head 12' to provide the valve support 10.

In the context of the present disclosure, the term 'initial shape' refers to a shape the valve support is to take when the cylinder head is in its non-operating condition. As such, the initial shape differs from the target shape.

The initial shape and the target shape may refer to or define the shape of the whole valve support 10 or of only parts of the valve support, such as of the valve seat section16, in particular the seating surface 28 and/or the conical seating surface 22, and/or of the valve guide section 18, in particular the valve guide 31 and/or the recessed valve guide portion 32.

Preferably, in step S2, the initial shape is to be determined such that, when the cylinder head 12 is transferred from its non-operating state to its operating state, the valve support 10, due to load-induced deformations, deforms from its initial shape into or substantially into the target shape. In other words, in the step S2, the initial shape is determined such that, when the cylinder head 12 is transferred from its non-operating state into its operating state, a valve support 10 in the cylinder head 12 having the initial shape is subjected to deformations, in particular load-induced deformations, which result in a shape of the valve support 10 which corresponds or substantially corresponds to the target shape of the valve support or which is in a predefined tolerance in view of the target shape.

As set forth above, step S2 of determining an initial shape of the valve support 10 in the non-operating state of the cylinder head 12 is performed by determining the shape change the valve support 10 is subjected to upon transferring the cylinder head 12 from its non-operating state to its operating state. In other words, step S2 comprises a sub-step S2.1 of determining the shape change the initial shape of the valve support 10 is subjected to upon transferring the cylinder head 12 from its non-operating state to its operating state. In other words, step S2 is based on a determination of the shape change the valve support 10 is subjected to upon transferring the cylinder head 12 from its non-operating state to its operating state. The determined shape change may be induced by at least one of thermal expansions and tensions, in particular inner tensions due to assembly of the cylinder head 12.

Step S2 of determining the initial shape, in particular its sub-step S2.1 of determining the shape change, may comprise or be performed by calculating or simulating the geometry change. For doing so, the step may be performed in a computer-implemented manner, i.e. by involving a computer, a computer network or other programmable apparatus, whereby determination of the shape change is realized by means of a computer program. For example, such computer program may perform a finite element analysis. As such, in the step of determining the initial shape, in particular its sub-step of determining the shape change, a finite element calculation may be performed. By doing so, a computer or mathematical model of the cylinder head 12 in the operating state may be provided specifying physical characteristics of the cylinder head, such as a shape, material properties, e.g. coefficient of thermal expansion, loads acting upon the cylinder head, heat transfer to and from the cylinder head 12, etc. Then, based on the computer model, the shape change of the cylinder head 12 and the at least one valve support 10 may be calculated based on the loads acting upon the cylinder head in the operating state.

In this configuration of the method, step S2 may be performed by, at first, preliminary determining the initial shape and thereafter calculating or simulating the shape change of the valve support 10 due to transferring the cylinder head 12 from its non-operating state to its operating state. The calculated resulting shape is then compared to the target shape. Based on this comparison, the initial shape previously set may be adapted before, again, the shape change based on the initial shape is calculated and simulated. This procedure may be iteratively repeated until the resulting shape corresponds or substantially corresponds to the target shape or is within a predefined tolerance relative to the target shape. Alternatively, the step S2 may be performed such that, starting from the target shape, the initial shape is calculated. In such a configuration, the target shape may serve as an input for a computer program, based on which the initial shape may be calculated by taking into account the shape change the valve support 10 is subjected to upon transferring the cylinder head 12 from its non-operating condition into its operating condition.

Alternatively, the step S2 of determining the initial shape, in particular its sub-step S2.1 of determining the shape change, may comprise measuring a shape change of a reference cylinder head when being transferred from a non-operating state to an operating state. In this configuration, the reference cylinder head may be employed in an engine to perform a test run. Specifically, such a reference cylinder head may be provided with a preliminary initial shape before being brought into the operating state. Thereafter, i.e. after bringing the reference cylinder head into the operating state for a predetermined period of time, the impact of the shape change may be measured at the reference cylinder head. Also in this configuration, the procedure may be iteratively repeated, i.e. by iteratively adapting the initial shape, until satisfying results are achieved, i.e. which ensure that, in the operating state, the shape change results in a shape of the valve support 10 which corresponds or substantially corresponds to the target shape or is within a predefined tolerance relative to the target shape.

Further, the shape change of the valve support 10 may depend on the position of the valve support 10 within the cylinder head 12. Accordingly, step S2 of determining the initial shape may be performed in dependence on a position of the valve support 10 within the cylinder head 12.

In step S3 of the method, as set forth above, a semi-finished cylinder head 12' is processed in the non-operating state to provide the valve seat 10 in the cylinder head 12 in accordance to the initial shape. In other words, in this method step, the valve support 10 is provided in the cylinder head 12 such that, in the non-operating state of the cylinder head 12, the valve support 10 has a shape corresponding or substantially corresponding to the initial shape determined in step S2. Specifically, step S3 of processing the semi-finished cylinder head 12' comprises a sub-step of machining, in particular of milling, the semi-finished cylinder head 12' to provide the valve support 10 in the cylinder head 12 according to the initial shape.

Step S3 may comprise or be performed by machining at least one of the valve seat section 16, in particular the seating surface 18 against which the seat insert 24 bears, and the valve guide section 18 according to the initial shape. Specifically, when machining the valve seat section 16, the recessed seat portion 26, specifically its seating surface 28, and/or the conical seating surface 22 may be machined. When machining the valve guide section 18, the valve guide 31 and/or the recessed guide portion 32 may be machined.

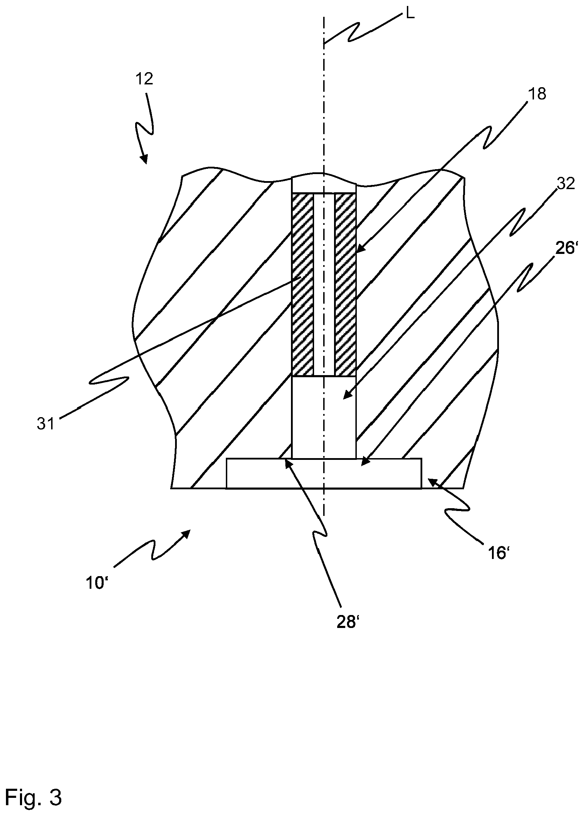

In the following, embodiments of step S3 are specified under reference to Figs. 3 to 5 which depict the cylinder head 12 in different states of the manufacturing procedure. In a first sub-step S3.1, the semi-finished cylinder head 12' in a non-operating state is provided, as depicted in Fig. 3. The semi-finished cylinder head 12' comprises a semi-finished valve support 10' having a semi-finished vale seat section 16' with a semi-finished recessed seat portion 26'. Further, the semi-finished valve support 10' comprises the valve guide section 18 with the recessed guide portion 32 in which the valve guide 18 is press-fitted.

The semi-finished cylinder head 12' may be provided by processing, in particular machining, a casted cylinder head block to provide the semi-finished recessed seat portion 26' and the recessed guide portion 32. This may be performed by using a first cutter, in particular a first milling cutter, configured to mill the semi-finished recessed seat portion 26' and a second cutter, in particular a second milling cutter, configured to mill the recessed guide portion 32. Thereafter, the valve guide 18 is press-fitted into the recessed guide portion 32 to provide the semi-finished cylinder head 12' as depicted in Fig. 3. The first cutter and the second cutter may be part of a multiple purpose tool.

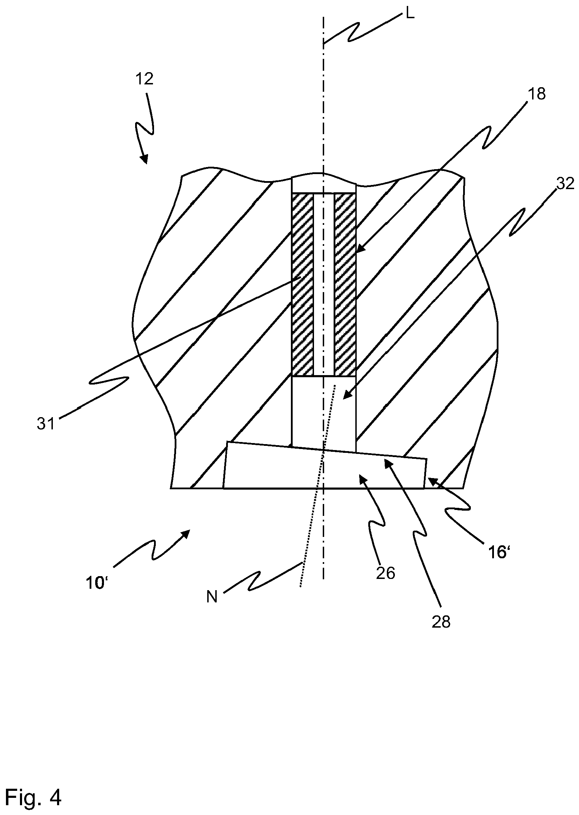

In a next sub-step S3.2, the semi-finished cylinder head 12' is processed, in particular machined, to provide the valve support 10 in the cylinder head 12 according to the initial shape. Specifically, in the shown embodiment of the method, this step S3.2 is performed to provide the seating surface 28 of the valve seat 16, in particular the planar seating surface 28, such that a surface normal N of the seating surface 28 has an angular deviation relative to the longitudinal axis L of the valve guide 18, as depicted in Fig. 4. Specifically, the angular deviation may be between 0° to 0.5°, in particular between 0.001° to 0.5°, for example between 0.01° to 0.5°. This angular deviation of the seating surface 28 is intended and configured to compensate the shape changes the valve support 10 is subjected to when the cylinder head 12 is transferred from the non-operating state into the operating state.

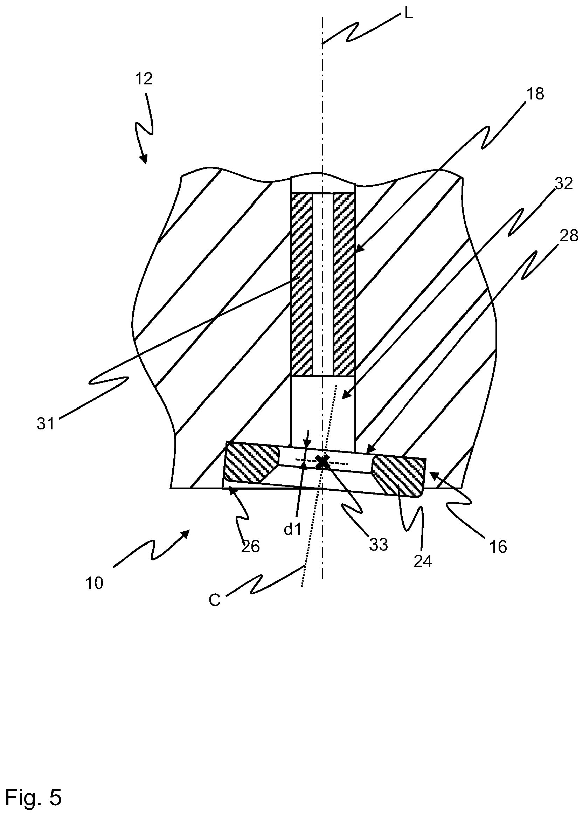

Thereafter, the seat insert 24 is press-fitted into the recessed seat portion 26 such that the seat insert 24 bears against the seating surface 28, thereby providing the valve support 10 in the cylinder head 12 in the non-operating condition, as indicated in Fig. 5. Specifically, the valve support 10 is provided such that a distance d1 between the seating surface 28 and an intersection point 33 between a center axis C of the seat insert 24 and the longitudinal axis L of the valve guide 18 is greater than 0 µm and particularly is in the range between 0 µm and 100 µm. In the method described above, alternatively, the valve guide 31may be inserted into the recessed guide portion 32 after machining of the seating surface 28.

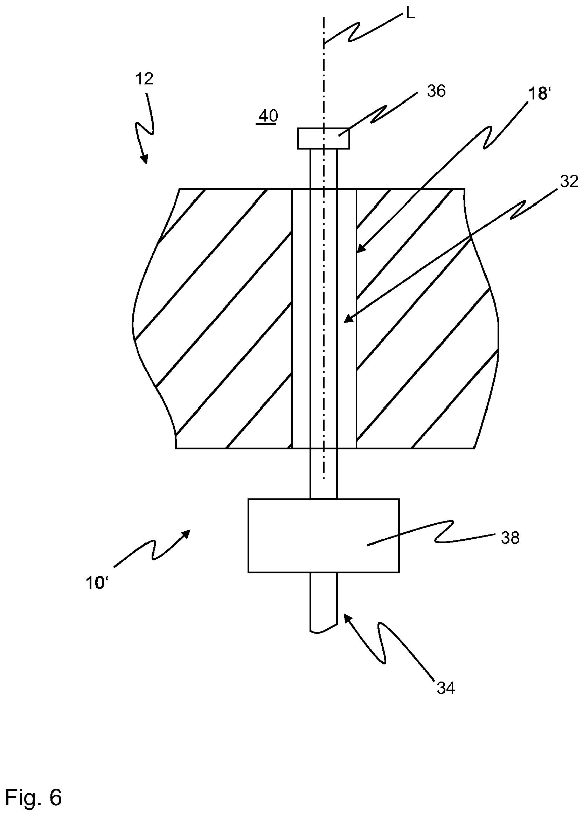

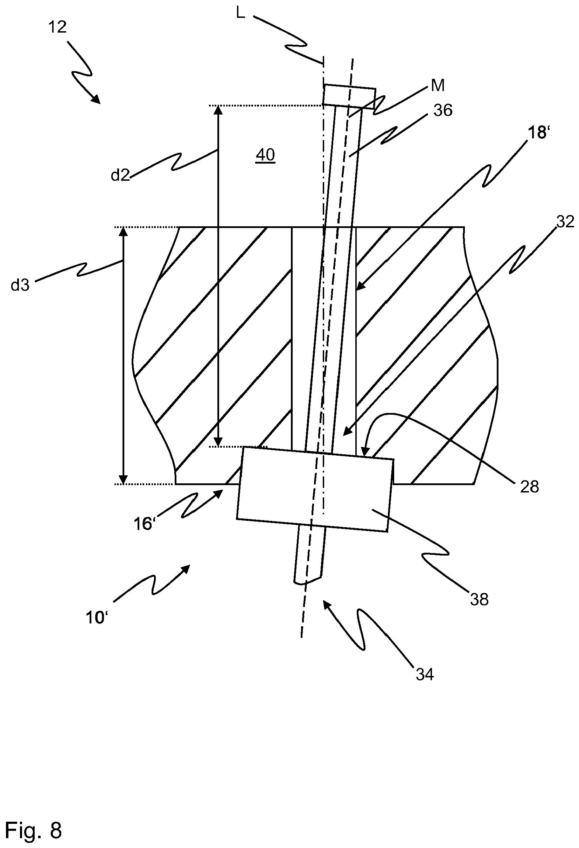

According to a further development, step S3.2 of processing the semi-finished cylinder head 12' may be performed by using a multiple purpose tool 34 as depicted in Figs. 6 to 8. The multiple purpose tool 34 has a first cutter 36, in particular a first milling cutter, configured to process, in particular to mill, the valve guide section 18, in particular the recessed guide portion 32 or the valve guide 31, and a second cutter 38, in particular a second milling cutter, configured to process, in particular to mill, the valve seat section 16, in particular the recessed seat portion 26 or the seat insert 24 thereof, to provide the valve support 10, in particular having the characteristics as described above. The first cutter 36 is arranged distal from the second cutter 38, wherein a minimal distance d2 between the first cutter 36 and the second cutter 38 is greater than a maximal distance d3 between the valve seat section 16 and the valve guide section 18 of the valve support 10, in particular along the longitudinal axis L of the valve guide section 18, as depicted in Fig. 8. When using such a multiple purpose tool to process the recessed guide portion 32, the valve guide 31 may be press-fit into the recessed guide portion 32 after machining the valve support 10, i.e. after machining the recessed guide portion 32 and the recessed seat portion 26. Alternatively, the valve guide may be provide in the recessed guide portion 32 before using the multiple purpose tool 34. In this configuration, the first cutter 36 is intended and configured to machine the valve guide 31, in particular its inner circumferential surface.

An exemplary use of such a multiple purpose tool 34 is described in the following under reference to Fig. 6 to 8. At first, the first cutter 36 of the multiple purpose tool 34 is used to machine the recessed guide portion 32. This is performed such that, at the end of this manufacturing step, the first cutter 36 protrudes from the recessed guide portion 32 into an inner space of the cylinder head 12, i.e. into which the recessed guide portion 32 opens, as depicted in Fig. 6.

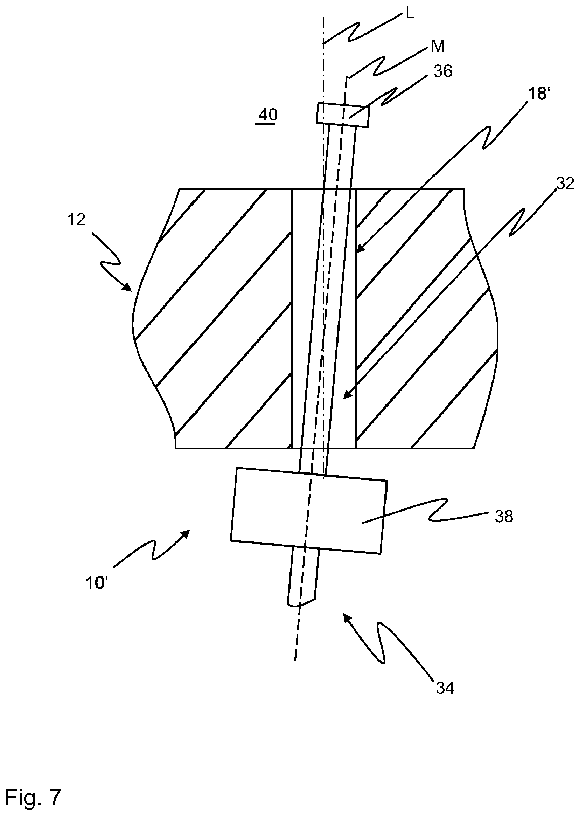

Thereafter, a spatial arrangement of the multiple purpose tool 34 is changed by pivoting the multiple purpose tool 34 relative to the cylinder head 12 such that, from a state as depicted in Fig. 6 in which a longitudinal axis M of the multiple purpose tool coincides with the longitudinal axis L of the valve guide section 18, the multiple purpose tool 34 is pivoted into an inclined state in which an angular deviation between the longitudinal axis M of the multiple purpose tool 34 and the longitudinal axis L of the valve guide section 18', in particular of the recessed guide portion 32, is greater than 0° and between 0° and 0.5°, as depicted in Fig. 7.

Thereafter, the multiple purpose tool 36 further advances, i.e. in a direction pointing towards the inner space of the cylinder head 12, such that the seating surface 28 with the above described characteristics is machined, as depicted in Fig. 8.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention. This particularly applies in view of the technical features described in the following.

A method is provided for providing at least one valve support in a cylinder head of an internal combustion engine, in particular of a diesel or gas engine, the method comprising: a step of determining a target shape of the valve support in an operating state of the cylinder head; a step of determining an initial shape of the valve support in a non-operating state of the cylinder head by determining a shape change the valve support is subjected to upon transferring the cylinder head from its non-operating state to its operating state; and a step of processing a semi-finished cylinder head in its non-operating state to provide the valve support in the cylinder head according to the initial shape.

In the operating state, the cylinder head may be employed in the engine during an operating condition of the engine, in particular a predefined operating condition. The operating condition of the engine may be a full-load operating condition or a partial-load operating condition of the engine.

The valve support may be configured to receive an inlet valve or an exhaust valve of the engine. Further, the initial shape of the valve support preferably differs from the target shape thereof.

In a further development, in the step of determining the initial shape, the initial shape may be determined such that, when the cylinder head is transferred from its non-operating state to its operating state, the valve support may deform from the initial shape into or substantially into the target shape.

Further, the determined shape change of the cylinder head may be induced by thermal expansions.

In a further development, the step of determining the shape change may comprise calculating the measuring a shape change of a reference cylinder head when being transferred from its non-operating state to its operating state.

Further, the step of processing the semi-finished cylinder head may comprises machining the semi-finished cylinder head to provide the valve support in the cylinder head according to the initial shape. Specifically, the step of processing the semi-finished cylinder head may comprise machining at least one of a valve seat section, in particular of a seating surface against which a seat insert bears, and a valve guide section of the valve support.

In a further development, the step of processing the semi-finished cylinder head may be performed to provide the seating surface of the valve support such that a surface normal of the seating surface has an angular deviation between 0.01° to 0.5° relative to a longitudinal axis of the valve guide section of the valve support. Alternatively or additionally, the step of processing the semi-finished cylinder head may be performed to provide the seating surface of the valve support such that a distance between the seating surface 28 and an intersection point of a center axis of the seat insert bearing against the seating surface with the longitudinal axis of the valve guide section is greater than 0 µm, in particular is in the range between 0 µm and 100 µm.

In a further development, the step of processing the semi-finished cylinder head may be performed by a multiple purpose tool having a first cutter configured to process the valve guide section and a second cutter configured to process the valve seat section of the valve support. Further, the first cutter may be arranged distal from the second cutter. Alternatively or additionally, a minimal distance between the first cutter and the second cutter may be greater than a maximal distance between the valve seat section and the valve guide section along the longitudinal axis of the valve guide section.

### Industrial Applicability

With reference to the Figures, a method for providing at least one valve support 10 in a cylinder head 12 of an internal combustion engine is suggested. The method as suggested above is applicable in any suitable internal combustion engine to provide at least one valve support in a cylinder head of an engine. The cylinder head provided by the method may replace conventional cylinder heads and may serve as a replacement or retrofit part.

## Claims

1. Method for providing at least one valve support (10) in a cylinder head (12) of an internal combustion engine, in particular of a diesel or gas engine, the method comprising:
- a step (S1) of determining a target shape of the valve support (10) in an operating state of the cylinder head (12);
- a step (S2) of determining an initial shape of the valve support (10) in a non-operating state of the cylinder head (12) by determining a shape change the valve support (10) is subjected to upon transferring the cylinder head (12) from its non-operating state to its operating state; and
- a step (S3) of processing a semi-finished cylinder head (12') in its non-operating state to provide the valve support (10) in the cylinder head (12) according to the initial shape.

2. Method according to claim 1, wherein in the operating state, the cylinder head (12) is employed in the engine during an operating condition of the engine, in particular a predefined operating condition.

3. Method according to claim 2, wherein the operating condition of the engine is a full-load operating condition.

4. Method according to claim 2, wherein the operating condition of the engine is a partial-load operating condition of the engine.

5. Method according to any one of claims 2 to 4, wherein the valve support (10) is configured to receive an inlet valve or an exhaust valve of the engine.

6. Method according to any one of claims 1 to 5, wherein the initial shape differs from the target shape.

7. Method according to any one of claims 1 to 6, wherein in the step (S2) of determining the initial shape, the initial shape is determined such that, when the cylinder head (12) is transferred from its non-operating state to its operating state, the valve support (10) deforms from the initial shape into or substantially into the target shape.

8. Method according to any one of claims 1 to 7, wherein the determined shape change of the cylinder head is induced by thermal expansions.

9. Method according to any one of claims 1 to 8, wherein the step (S2) of determining the shape change comprises calculating the shape change, in particular by performing a finite element calculation.

10. Method according to any one of claims 1 to 8, wherein the step (S2) of determining the shape change comprises measuring a shape change of a reference cylinder head when being transferred from its non-operating state to its operating state.

11. Method according to any one of claims 1 to 10, wherein the step (S3) of processing the semi-finished cylinder head (12') comprises machining the semi-finished cylinder head (12') to provide the valve support (10) in the cylinder head according to the initial shape.

12. Method according to any one of claims 1 to 11, wherein the step (S3) of processing the semi-finished cylinder head (12') comprises machining at least one of a valve seat section (16), in particular of a seating surface (28) against which a seat insert (24) bears, and a valve guide section (18) of the valve support (10).

13. Method according to any one of claims 1 to 12, wherein the step (S3) of processing the semi-finished cylinder head (12') is performed to provide the seating surface (28) of the valve support (10) such that a surface normal (N) of the seating surface (28) has an angular deviation between 0.01° to 0.5° relative to a longitudinal axis (L) of the valve guide section (18).

14. Method according to any one of claims 1 to 13, wherein the step (S3) of processing the semi-finished cylinder head (12') is performed to provide the seating surface (28) of the valve support (10) such that a distance (d1) between the seating surface 28 and an intersection point of a center axis (C) of the seat insert (24) bearing against the seating surface (28) with the longitudinal axis (L) of the valve guide section (18) is greater than 0 µm, in particular is in the range between 0 µm and 100 µm.

15. Method according to any one of claims 1 to 14, wherein the step (S3) of processing the semi-finished cylinder head (12') is performed by a multiple purpose tool (34) having a first cutter (36) configured to process the valve guide section (18) and a second cutter (38) configured to process a valve seat section (16) of the valve support (10), wherein
the first cutter (36) is arranged distal from the second cutter (38), and wherein
a minimal distance (d2) between the first cutter (36) and the second cutter (38) is greater than a maximal distance (d3) between the valve seat section (16) and the valve guide section (18) along the longitudinal axis (L) of the valve guide section (18).
